# DEMANDE DE BREVET EUROPEEN

(11) **EP 3 888 902 A1**
(43) Date de publication de la demande: **06.10.2021**
(21) Numéro de dépôt: 21166190.5
(22) Date de dépôt: 31.03.2021
(51) Int. Cl.: B32B 1/08, B32B 3/30, B32B 7/12, B32B 7/14, B32B 9/00, B32B 9/04, B32B 13/04, B32B 13/14, B28D 1/00, B32B 37/00, E04C 2/04, E04C 2/06, E04F 13/14

(54) **ELÉMENT FONCTIONNEL MINÉRAL, ASSEMBLAGE MINÉRAL ET PROCÉDÉS DE FABRICATION ASSOCIÉS**

(30) Priorité: 01.04.2020 FR 2003273
(71) Demandeur: Kernex, 75001 Paris (FR)
(72) Inventeur: REVERTE, Vincent, Grégoire, René, José, 31180 LAPEYROUSE FOSSAT (FR); CHALMEAU, Rémi, Hugues, 37600 LOCHES (FR)
(74) Mandataire: Lavoix

(57) **Abrégé**

L'élément fonctionnel minéral (12) comprend:
- une première couche minérale (14) comprenant une première face (20) et une deuxième face (22) définissant entre elles l'épaisseur (E1) de la première couche minérale (14) ; et
- une couche de renfort composite (16) s'étendant sur la première couche minérale (14), la couche de renfort composite (16) comprenant une pluralité de fibres (34) et une matrice (36).

La première couche minérale (14) comprend au moins un premier sillon (24) s'étendant dans l'épaisseur (E1) de la première couche minérale (14) et débouchant sur la deuxième face (22), au moins une première portion (38) de la couche de renfort composite (16) étant disposée dans le premier sillon (24) et comblant ledit premier sillon (24) dans ladite épaisseur (E1).

## Description

La présente invention concerne un élément fonctionnel minéral comprenant:
- une première couche minérale comprenant une première face et une deuxième face définissant entre elles l'épaisseur de la première couche minérale ; et
- une couche de renfort composite s'étendant sur la première couche minérale, la couche de renfort composite comprenant une pluralité de fibres et une matrice.

On entend ici par élément fonctionnel minéral un élément formé au moins partiellement par un minéral étant utilisé non seulement pour son esthétique, mais aussi pour ses propriétés structurelles

Les éléments fonctionnels minéraux sont utilisés pour la construction d'une large variété de structures.

De tels éléments fonctionnels minéraux sont notamment utilisés pour toute application où une structure à la fois robuste et esthétique est désirée. Cela concerne par exemple des cloisons où les éléments fonctionnels minéraux forment des plaques autoporteuses à l'aspect satisfaisant. Cela peut aussi concerner des éléments aux formes plus complexes pouvant par exemple présenter des surfaces courbes, tels par exemple des structures de mobilier telles des structures d'escalier.

Afin de former de tels éléments, il est connu de recouvrir une couche minérale d'une couche de renfort en matériau composite. La couche de renfort en matériau composite comprend par exemple une pluralité de fibres et une matrice qui est imprégnée dans la couche de fibres, sur une face de l'élément fonctionnel minéral.

Toutefois, de tels éléments fonctionnels minéraux ne donnent pas entière satisfaction. En effet, la couche de renfort composite d'un tel élément fonctionnel minéral est visible sur l'ensemble de la tranche de l'élément fonctionnel minéral, ce qui dégrade l'aspect de l'élément fonctionnel minéral. La distribution de la couche de renfort composite sur l'élément fonctionnel minéral n'est en outre pas contrôlée et peut s'avérer inadaptée aux contraintes auxquelles l'élément fonctionnel minéral est amené à être exposé. Des formes complexes ou de petites dimensions sont alors difficilement réalisables pour de tels éléments minéraux.

Un des buts de l'invention est de proposer un élément fonctionnel minéral dont l'esthétique et dont les performances structurelles sont améliorées tout en réduisant la quantité de matériau minéral nécessaire pour le réaliser.

A cet effet, l'invention a pour objet un élément fonctionnel minéral tel que précité, dans lequel la première couche minérale comprend au moins un premier sillon s'étendant dans l'épaisseur de la première couche minérale et débouchant sur la deuxième face, au moins une première portion de la couche de renfort composite étant disposée dans le premier sillon et comblant ledit premier sillon dans ladite épaisseur.

Un tel élément fonctionnel minéral, par la présence d'au moins un premier sillon sur la première couche minérale, limite la visibilité la couche de renfort composite qui s'étend au moins en partie dans ce sillon. La couche composite est notamment très peu visible depuis la tranche de l'élément fonctionnel minéral, ce qui est particulièrement avantageux puisque ceci donne à l'élément fonctionnel un aspect esthétiquement satisfaisant, s'approchant de celui d'un élément fonctionnel sans couche de renfort composite. La présence d'au moins une première portion de la couche de renfort composite dans le premier sillon assure par ailleurs à l'élément fonctionnel minéral de bonnes performances structurelles, notamment assurant que la couche de renfort composite soit disposée dans les régions les plus exposées à des contraintes lors de l'utilisation de l'élément fonctionnel minéral. Ceci permet en outre la réalisation d'une grande variété de formes d'éléments minéraux.

Selon des modes de réalisation particuliers de l'invention, l'élément fonctionnel minéral présente l'une ou plusieurs des caractéristiques suivantes, prise(s) isolément ou suivant toute(s) combinaison(s) techniquement possible(s) :
- l'élément minéral comprend une deuxième couche minérale comprenant une troisième face et une quatrième face définissant entre elles l'épaisseur de la deuxième couche minérale, la troisième face s'étendant en regard de la deuxième face de la première couche minérale ;
- la deuxième couche minérale comprend au moins un deuxième sillon s'étendant dans l'épaisseur de la deuxième couche minérale et débouchant sur la troisième face, au moins une deuxième portion de la couche de renfort composite étant disposée dans le deuxième sillon et comblant ledit deuxième sillon dans ladite épaisseur ;
- la première couche minérale et la deuxième couche minérale sont solidarisées par la couche de renfort composite, le premier sillon s'étendant en regard de la troisième face et définissant un canal d'accueil de la couche de renfort composite ;
- l'élément minéral présente une forme de plaque, la première face étant sensiblement parallèle à la deuxième face ; et
- l'élément minéral présente une forme tubulaire, la deuxième face étant sensiblement parallèle à la troisième face, la première face étant courbée par rapport à la deuxième face et la quatrième face étant courbée par rapport à la troisième face, la première face et la quatrième face formant ensemble un contour tubulaire de l'élément fonctionnel minéral.

L'élément concerne en outre un assemblage fonctionnel minéral comprenant une pluralité d'éléments minéraux tels que précités, dans lequel chaque première couche minérale comprend au moins une face d'aboutement transversale à la deuxième face, la face d'aboutement de chaque élément minéral étant disposée en regard d'une face d'aboutement d'un élément minéral lui étant adjacent, les faces d'aboutement de deux éléments minéraux adjacents étant parallèles entre elles.

Selon des modes de réalisation particuliers de l'invention, l'assemblage fonctionnel minéral présente l'une ou plusieurs des caractéristiques suivantes, prise(s) isolément ou suivant toute(s) combinaison(s) techniquement possible(s) :
- l'angle formé entre la deuxième face d'un élément minéral et la face d'aboutement dudit élément fonctionnel minéral est différent de l'angle formé entre la première face d'un élément fonctionnel minéral adjacent et la face d'aboutement dudit élément fonctionnel minéral adjacent ; et
- au moins deux éléments fonctionnel minéraux comprennent une même couche de renfort composite, la couche de renfort composite s'étendant sur au moins deux éléments fonctionnels minéraux.

L'invention concerne par ailleurs un procédé de fabrication d'un élément minéral tel que précité, comprenant les étapes suivantes :
- fourniture d'une première couche minérale comprenant une première face et une deuxième face définissant entre elles l'épaisseur de la première couche minérale,
- creusage d'au moins un premier sillon dans la première couche minérale, et
- imprégnation sous vide de la couche de renfort composite dans au moins un premier sillon creusé pour former l'élément fonctionnel minéral.

Selon des modes de réalisation particuliers de l'invention, le procédé de fabrication présente l'une ou plusieurs des caractéristiques suivantes, prise(s) isolément ou suivant toute(s) combinaison(s) techniquement possible(s) :
- le procédé comporte les étapes suivantes :
- fourniture d'une première couche minérale comprenant une première face et une deuxième face définissant entre elles l'épaisseur de la première couche minérale, et d'une deuxième couche minérale comprenant troisième face et une quatrième face définissant entre elles l'épaisseur de la deuxième couche minérale,
- creusage d'au moins un premier sillon dans la première couche minérale,
- mise en place de la deuxième face en regard de la troisième face, le premier sillon étant disposé face à la troisième face pour former un canal d'accueil de la couche de renfort composite, et
- imprégnation sous vide de la couche de renfort composite dans le canal d'accueil défini par le premier sillon pour former l'élément fonctionnel minéral ;
- le procédé comporte les étapes suivantes :
- fourniture d'une première couche minérale comprenant une première face et une deuxième face définissant entre elles l'épaisseur de la première couche minérale, et d'une deuxième couche minérale comprenant troisième face et une quatrième face définissant entre elles l'épaisseur de la deuxième couche minérale,
- creusage d'au moins un premier sillon dans la première couche minérale,
- mise en place de la deuxième face en regard de la troisième face, le premier sillon étant disposé face à la troisième face pour former un canal d'accueil de la couche de renfort composite,
- imprégnation sous vide de la couche de renfort composite dans le canal d'accueil défini par le premier sillon pour former l'élément fonctionnel minéral, et
- découpe de la première couche minérale et de la deuxième couche minérale autour de la couche de renfort composite pour former un élément minéral de forme tubulaire.

D'autres caractéristiques et avantages de l'invention apparaîtront à la lecture de la description qui va suivre, donnée uniquement à titre d'exemple et faite en se référant aux dessins annexés, dans lesquels :
[Fig 1] la figure 1 est une représentation schématique éclatée en perspective d'un assemblage fonctionnel minéral comprenant deux éléments fonctionnels minéraux selon l'invention,
[Fig 2] la figure 2 est une représentation schématique vue perpendiculairement à la deuxième face d'un élément fonctionnel minéral selon l'invention différent de ceux présenté en figure 1,
[Fig 3] la figure 3 est une représentation en coupe selon le plan de coupe C-C de la figure 2,
[Fig 4] la figure 4 est une représentation schématique d'un élément intermédiaire pour obtenir un élément fonctionnel minéral selon une variante particulière de l'invention,
[Fig 5] la figure 5 est une représentation d'un élément fonctionnel minéral selon ladite variante particulière, obtenu à l'aide de l'élément intermédiaire présenté en figure 4, et

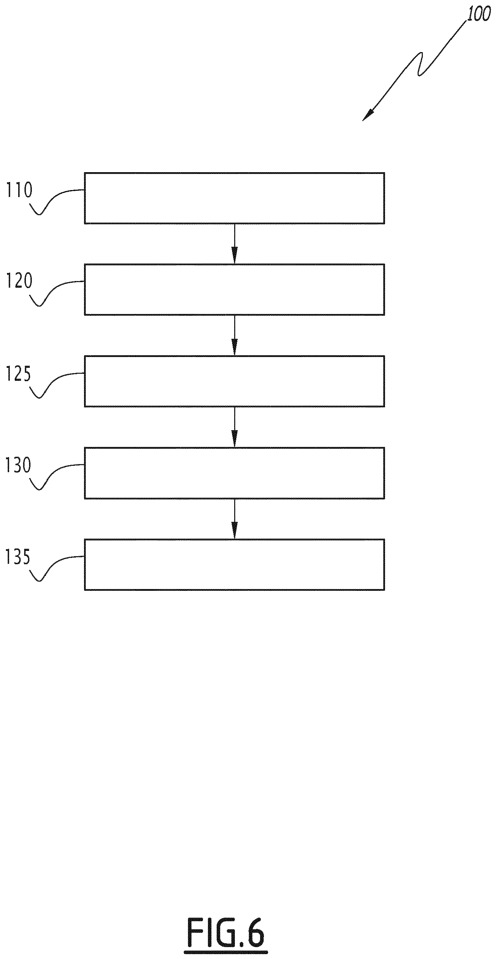

[Fig 6] la figure 6 est un logigramme représentant les étapes d'un procédé de fabrication de l'élément minéral de la figure 5.

Dans la suite de la description, on définit « transversal » comme non parallèle et sécant. Ainsi, deux plans transversaux sont non parallèles et sécants.

Dans la suite de la description, on entend comme minéral tout matériau constitué de matière inorganique. Un minéral est alors par exemple une roche ou un assemblage d'éléments rocheux tel du terrazzo. De la céramique ou du ciment sont alors considérés comme des minéraux.

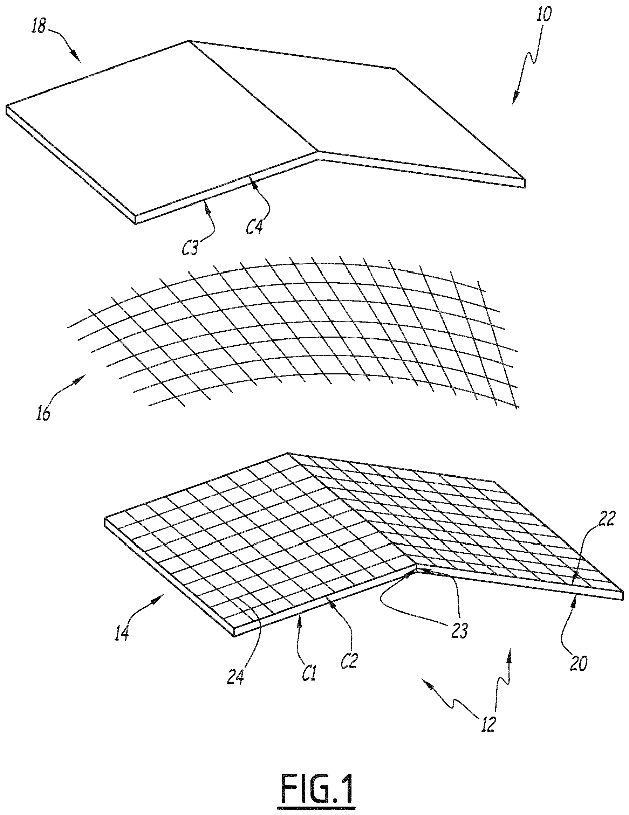

En référence à la figure 1, un assemblage fonctionnel minéral 10, aussi appelé par la suite assemblage minéral 10, comporte une pluralité d'éléments fonctionnels minéraux 12, aussi appelés par la suite éléments minéraux 12. On entend par assemblage fonctionnel minéral 10 un assemblage d'éléments formés aux moins partiellement par un matériau minéral, assemblés non seulement pour leur esthétique mais aussi à des fins structurelles.

Chaque élément minéral 12 comprend une première couche minérale 14, une couche de renfort composite 16 et, dans un mode de réalisation particulier, une deuxième couche minérale 18.

La première couche minérale 14 est par exemple formée à partir d'un bloc de pierre monolithique. En variante, la première couche minérale 14 est formée à partir d'un agrégat de morceaux de pierre, par exemple collés entre eux pour former ladite première couche minérale 14.

La première couche minérale 14 est par exemple formée à partir d'au moins un matériau minéral, par exemple de la liste de pierres consistant en : marbre, granit, calcaire, schiste, brèche, onyx, pierre de lave. La première couche minérale 14 est en variante formée à partir d'au moins un matériau minéral pris dans la liste consistant en : terrazzo, céramique, ciment, terre cuite, porcelaine ou tout autre matériau minéral.

Dans la variante selon laquelle la première couche minérale est formée à partir d'un bloc de pierre monolithique, la première couche minérale est par exemple formée à partir d'une pierre telle : une roche magmatique, une roche métamorphique ou une roche sédimentaire.

La première couche minérale 14 comprend une première face 20, une deuxième face 22 et de préférence une face d'aboutement 23. La première couche minérale 14 comprend au moins un premier sillon 24.

La première face 20 définit un premier contour C1 et la deuxième face 22 définit un deuxième contour C2.

La première face 20 et la deuxième face 22 s'étendent par de part et d'autre de la première couche minérale 14. La première face 20 et la deuxième face 22 définissent entre elles l'épaisseur E1 de la première couche minérale 14. L'épaisseur E1 de la première couche minérale est par exemple définie comme la distance maximale entre la première face 20 et la deuxième face 22. L'épaisseur E1 est par exemple comprise entre 3 et 200mm

La première face 20 est, par exemple, comme illustré sur le figures 1 à 3, sensiblement plane.

La deuxième face 22 est de préférence sensiblement plane

La première face 20 est par exemple sensiblement parallèle à la deuxième face 22 et l'élément minéral 12 est par exemple en forme de plaque.

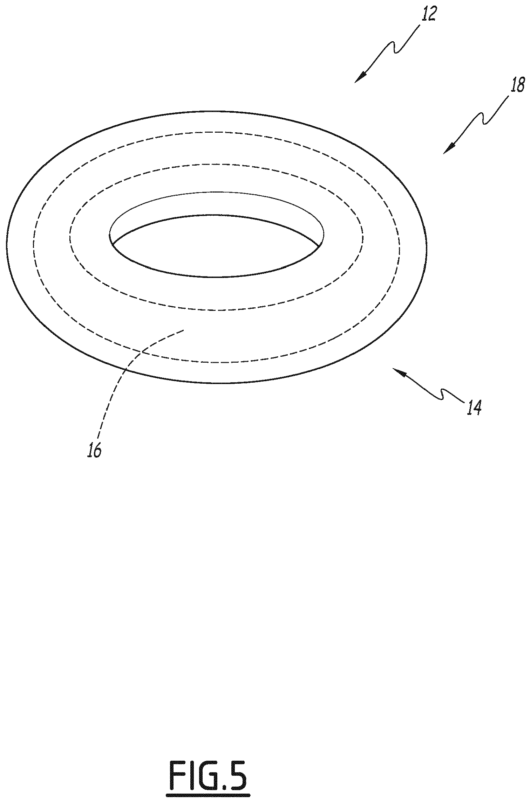

En variante, comme illustré en figure 5, la première face est par exemple courbée par rapport à la deuxième face 22. La première face 20 et la deuxième face 22 forment alors un contour en forme de demi tube. La face d'aboutement 23 s'étend entre la première face 20 et la deuxième face 22 et relie celles-ci entre elles. La face d'aboutement 23 est par exemple connectée à la première face 20 et à la deuxième face 22 et forme un bord de la première couche minérale 18.

La face d'aboutement 23 est transversale à la deuxième face 22. La face d'aboutement 23 est de préférence transversale à la première face 20.

La face d'aboutement 23 est de préférence plane. La face d'aboutement 23 d'un élément minéral 12 est destinée à être disposée en regard d'une face d'aboutement 23 d'un élément minéral 12 lui étant adjacent.

La face d'aboutement 23 forme un angle A1 avec la première face 20. L'angle A1 est par exemple compris entre 10° et 170° .

La face d'aboutement 23 forme un angle A2 avec la deuxième face 22. L'angle A2 est par exemple compris entre 10° et 170° .

Le premier sillon 24 s'étend dans l'épaisseur E1 de la première couche minérale 14. Le premier sillon 24 débouche sur la deuxième face 22.

Le premier sillon 24 s'étend par exemple depuis la deuxième face 22 en direction de la première face 20 selon une première profondeur P1. La première profondeur P1 est par exemple comprise entre 1% et 99% de l'épaisseur E1 . La première profondeur P1 est strictement inférieure à l'épaisseur E1.

Le premier sillon 24 débouche par exemple sur la deuxième face 22 selon un premier tracé 26.

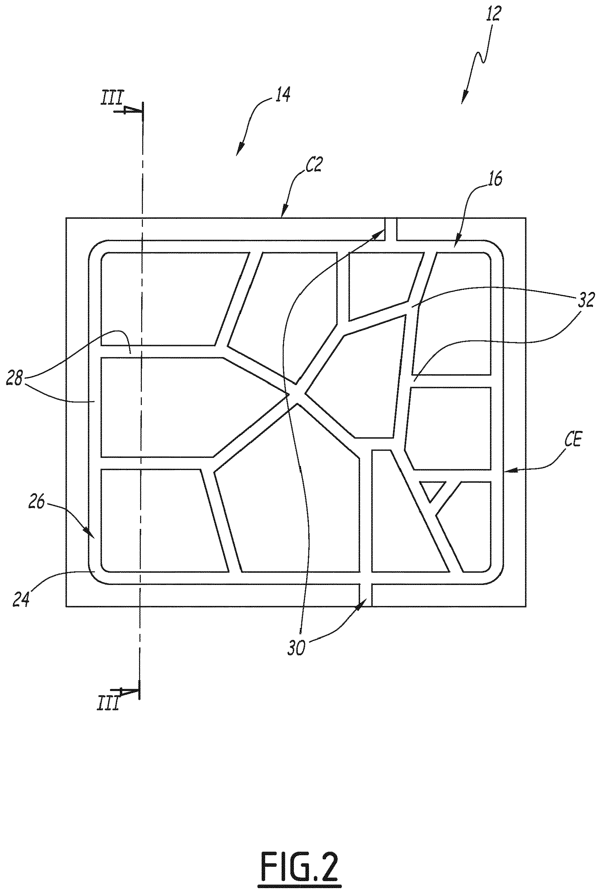

Dans l'exemple de la figure 2, le premier tracé 26 comporte une pluralité de tronçons de circulation 28, deux tronçons d'alimentation 30 et une pluralité de noeuds 33. La pluralité de noeuds 33 connecte les tronçons d'alimentation 30 aux tronçons de circulation 28 et la pluralité de noeuds connecte les tronçons de circulation 28 entre eux.

En variante, le premier tracé 26 ne comporte pas de nœud 32 et le premier tracé 26 est formé, par exemple, par un tronçon de circulation 28 connecté de part et d'autre à deux tronçons d'alimentation 30.

Le premier tracé 26 est par exemple de largeur constante sur la deuxième face 22. L'homme du métier comprendra que par largeur du premier tracé 26 on entend largeur des tronçons de circulation 28 et des tronçons d'alimentation 30 du tracé prise perpendiculairement à la plus grande dimension, aussi appelée longueur, desdits tracés et perpendiculairement à l'épaisseur E1 de la première couche minérale 14.

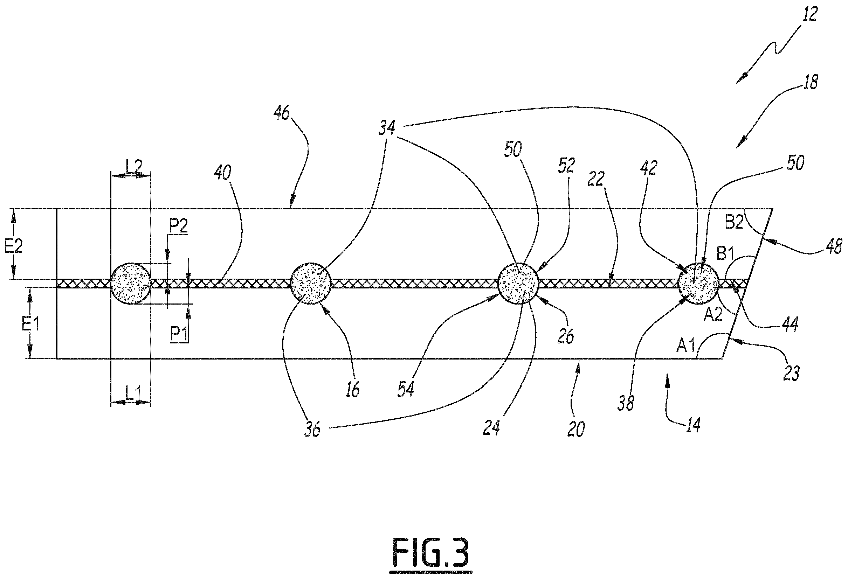

Une largeur L1 du premier tracé 26 est par exemple comprise entre 1 mm et 190 mm. La largeur L1 correspond par exemple à une largeur maximale du premier sillon, la largeur du premier sillon 24 étant par exemple décroissante avec la profondeur du sillon 24. Dans le mode de réalisation présenté en figure 3, le sillon 24 est alors, pris en coupe perpendiculairement à la direction correspondant à la longueur d'un tronçon de circulation 28, en forme de section de cercle, par exemple en forme de demi-cercle, le fond du sillon 24 étant alors en forme de section de cylindre.

Le premier tracé 26 est contenu par exemple dans une surface comprise entre 5% et 99% de la deuxième face 22 et de préférence sur une surface comprise entre 20% et 80% de la deuxième face 22.

La forme du premier tracé 26 est par exemple définie préalablement à la réalisation de la première couche minérale 14 en fonction de contraintes de conception et d'utilisation de l'élément fonctionnel minéral 12. En particulier, le premier tracé 26 est prévu où un renfort est nécessaire dans l'élément fonctionnel minéral 12 en fonction des contraintes internes à l'élément fonctionnel minéral 12. La forme du premier tracé 24 est par exemple irrégulière telle que présenté en figure 2. Par irrégulière on entend par exemple ici que la forme du premier tracé ne comprend pas de symétrie apparente.

En variante, la forme du premier tracé 26 est par exemple régulière, c'est-à-dire que la forme du premier tracé 26 comporte un ou plusieurs plans de symétrie.

En particulier, le premier tracé 26 est par exemple en forme de quadrillage, comme représenté en figure 1. En variante, les tronçons de circulation 28 du premier tracé 26 forment par exemple une pluralité de polygones pour former le premier tracé 26.

Le premier tracé 26 définit un contour extérieur CE de tracé. Le contour extérieur CE correspond au plus petit contour convexe s'étendant sur la deuxième face 22 et entourant entièrement le premier tracé 26.

Le contour extérieur CE correspond au plus petit contour convexe comprenant l'ensemble des tronçons de circulation 28 et des nœuds 32.

Chaque tronçon d'alimentation s'étend par exemple entre le contour extérieur CE et le deuxième contour C2. Chaque tronçon d'alimentation débouche alors par exemple sur une des face d'aboutement 23 ou sur la face d'aboutement 23.

L'ensemble des tronçons de circulation 28 du premier tracé 26 s'étendent par exemple sur une zone correspondant à au moins 5% et 95% de la superficie de la deuxième face 22.

La couche de renfort composite 26 est réalisée en un matériau composite comprenant une pluralité de fibre 34 et une matrice 36.

La pluralité de fibres 34 comporte par exemple une pluralité de fibres choisie dans la liste consistant en : fibres de verre, fibres de carbone, fibres de kevlar, fibres de basalte, fibres d'aramides, fibres naturelles (lin, chanvres, coco).

La pluralité de fibres 34 est par exemple imprégnée de matrice durcie autour des fibres 34.

La matrice 36 est par exemple une matrice thermoplastique ou une matrice thermodurcissable. La matrice 36 est par exemple une matrice 36 telle de l'époxy ou une matrice en polyester insaturé . La matrice est de préférence une matrice biosourcée, formée par exemple au moins partiellement à partir de composants végétaux, tels notamment de l'huile de lin.

La couche de renfort composite 26 s'étend sur la première couche minérale 14. La couche de renfort composite 26 comprend une première portion 38 et par exemple une portion plane 40.

Dans le mode de réalisation dans lequel l'élément fonctionnel minéral 12 comprend une deuxième couche minérale 18, la couche de renfort composite 26 comprend par exemple une deuxième portion 42.

La couche de renfort composite 16 solidarise la première couche minérale 14 à la deuxième couche minérale 18.

La première portion 38 de la couche de renfort composite 16 est disposée dans le premier sillon 24. La première portion 38 comble le premier sillon 24 dans l'épaisseur E1 de la première couche minérale 14. En d'autres termes, la première portion 38 remplit le premier sillon 24 selon toute la profondeur P1 du premier sillon 24.

Dans la variante selon laquelle la couche de renfort composite 26 comprend une portion plane 40, la portion plane 40 s'étend sur la deuxième face 22 et sur la première portion 38, par exemple en formant un film sur la deuxième face 22 et sur la première portion 38. La portion plane 40 s'étend par exemple sur l'ensemble de la superficie délimitée par le deuxième contour C2.

La pluralité de fibres 34 de la portion plane 40 est par exemple différente de la pluralité de fibres 34 de la première portion 38. La pluralité de fibres 34 de la portion plane 40 est par exemple agencée de sorte à former une nappe de fibres s'étendant sur la deuxième face 22. La pluralité de fibres 34 de la première portion 38 est par exemple agencée de sorte à former un cordon de fibres s'étendant dans le premier sillon 24.

Le mode de réalisation dans lequel l'élément fonctionnel minéral 12 comprend une deuxième couche minérale 18, est par exemple visible sur les figures 1, 3 et 5.

La deuxième couche minérale 18 comprend une troisième face 44 et une quatrième face 46, et de préférence une face d'aboutement complémentaire 48. Selon une variante particulière, la deuxième couche minérale 18 comprend au moins un deuxième sillon 50.

La troisième face définit un troisième contour C3 et la quatrième face définit un quatrième contour C4.

La troisième face 44 et la quatrième face 46 s'étendent de part et d'autre de la deuxième couche minérale 18. La troisième face 44 et la quatrième face 46 définissent entre elles l'épaisseur E2 de la deuxième couche minérale 18. L'épaisseur E2 de la deuxième couche minérale 18 est par exemple définie comme la distance maximale entre la troisième face 44 et la quatrième face 46. L'épaisseur E2 est par exemple comprise entre 3 et 200 mm.

La troisième face 44 est de préférence sensiblement plane. La troisième face 44 s'étend en regard de deuxième face 22 de la première couche minérale 14. La troisième face 44 s'étend en particulier parallèlement à la deuxième face 22. La deuxième face 22 est par exemple au contact de la troisième face 44. En variante, la troisième face 44 est légèrement décalée de la deuxième face 22 dans la direction de l'épaisseur E1 de la première face et de l'épaisseur E2 de la deuxième face. La portion plane 40 de la couche de renfort composite s'étend alors entre la deuxième face 22 et la troisième face 44. Le deuxième contour C2 et le troisième contour C3 sont par exemple confondus ou légèrement décalés. Par légèrement décalé, on entend décalés de moins de 5mm.

Dans la variante particulière présentée sur les figures 1 à 3, la troisième face 44 est par exemple sensiblement plane et parallèle à la quatrième face 46.

Dans une autre variante, comme illustré en figure 5, la quatrième face 46 est par exemple courbée par rapport à la troisième face 44. La quatrième face 46 et la troisième face 44 forment alors un contour en forme de demi tube. En particulier, comme présenté en figure 5, dans la variante selon laquelle la première face 20 et la deuxième face 22 forment un contour en forme de demi tube et la quatrième face 46 et la troisième face 44 forment un contour en forme de demi tube, la première face 20 et la quatrième face 46 forment ensemble un contour tubulaire de l'élément minéral 12.

Par tubulaire on entend ici que la première face 20 et la quatrième face 46 s'étendent autour d'un tracé central et sont sensiblement allongées le long du tracé central. La section du contour tubulaire est alors par exemple circulaire ou polygonale. La section est par exemple triangulaire ou carrée.

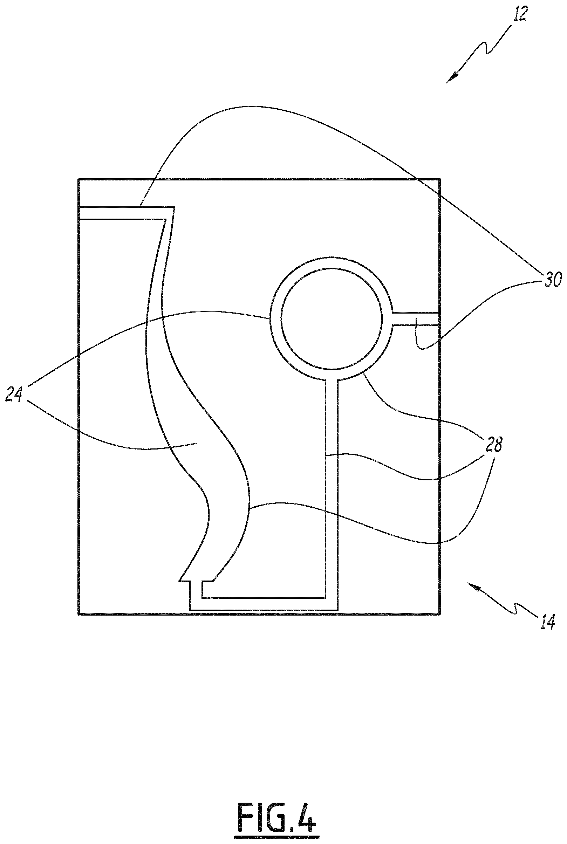

La section du contour tubulaire est par exemple variable le long du tracé central. En particulier, la superficie et/ou la forme de la section du contour tubulaire est par exemple variable le long du tracé central, tel que représenté en figure 4. La section du contour tubulaire est par exemple circulaire autour d'un point du tracé central et polygonale autour d'un autre point du tracé central.

La face d'aboutement complémentaire 48 s'étend de préférence entre la troisième face 44 et la quatrième face 46 et relie celles-ci entre elles. La face d'aboutement complémentaire est par exemple connectée à la troisième face 44 et à la quatrième face 46 et forme un bord de la deuxième couche minérale 18.

La face d'aboutement complémentaire 48 est transversale à la troisième face 44. La face d'aboutement complémentaire 48 est de préférence transversale à la quatrième face 46.

La face d'aboutement complémentaire 48 est de préférence plane. La face d'aboutement complémentaire 48 d'un élément minéral 12 est destinée à être disposée en regard d'une face d'aboutement complémentaire 48 d'un élément minéral lui étant adjacent.

La face d'aboutement complémentaire 48 forme un angle B1 avec la troisième face 44. L'angle B1 est par exemple compris entre 10° et 170° . L'angle B1 est par exemple l'angle supplémentaire de l'angle A2. La face d'aboutement complémentaire 48 s'étend alors dans le prolongement de la face d'aboutement 23.

La face d'aboutement complémentaire 48 forme un angle B2 avec la quatrième face 46. L'angle B2 est par exemple compris entre 10° et 170° .

La variante particulière selon laquelle la deuxième couche minérale 18 comprend au moins un deuxième sillon 50 est présentée en figure 3.

Le deuxième sillon 50 s'étend dans l'épaisseur E2 de la deuxième couche minérale 18. Le deuxième sillon 50 débouche sur la troisième face 44.

Le deuxième sillon 50 s'étend par exemple depuis la troisième face 44 en direction de la quatrième face 46 selon une deuxième profondeur P2. La deuxième profondeur P2 est par exemple comprise entre 1 et 99% de l'épaisseur E2 mm. La deuxième profondeur P2 est par exemple égale à la première profondeur P1.

Le deuxième sillon 50 débouche par exemple sur la troisième face 44 selon un deuxième tracé 52. Le deuxième tracé 52 est de préférence de forme semblable au premier tracé.

Le deuxième sillon 50 s'étend en regard du premier sillon 24. En particulier, le deuxième sillon 50 et le premier sillon 24 sont symétriques par rapport à un plan médian s'étendant à équidistance entre la deuxième face 22 et la troisième face 44. Une largeur L2 du deuxième tracé est alors comprise, entre 1 mm et 190 mm et est égale à la largeur L1. La largeur L2 correspond alors à la largeur maximale du deuxième sillon 50, la largeur du deuxième sillon 50 étant par exemple décroissante avec la profondeur du deuxième sillon 50.

Le premier sillon 24 s'étend en regard de la troisième face 44 et définit un canal d'accueil 54 de la couche de renfort composite. En particulier, dans l'exemple de la figure 3, le premier sillon 24 et le deuxième sillon 50 forment ensemble le canal d'accueil 54 de la couche de renfort composite 16.

La deuxième portion 42 de la couche de renfort composite 16 est disposée dans le deuxième sillon 50. La deuxième portion 50 comble le deuxième sillon dans l'épaisseur E2 de la deuxième couche minérale 18. En d'autres termes, la deuxième portion 42 remplit le deuxième sillon 50 selon toute la profondeur P2 du deuxième sillon 50.

Dans la variante selon laquelle la couche de renfort composite 26 comprend une portion plane 40, la portion plane 40 s'étend sur la troisième face 44 et sur la deuxième portion 38, par exemple en formant un film entre d'une part la deuxième face 22 et la première portion 38 et, d'autre part, la troisième face 44 et la deuxième portion 42.

La pluralité de fibres 34 de la deuxième portion 42 est par exemple semblable à la pluralité de fibres de la première portion 38.

Dans une variante non représentée, dans laquelle la deuxième couche minérale 18 ne comprend pas de deuxième sillon 50, le canal d'accueil 54 de la couche de renfort composite 16 est formé par le premier sillon 24 et la troisième face 44.

L'assemblage fonctionnel minéral 10 comprend au moins deux éléments fonctionnels minéraux 12 tels que précédemment décrits. A titre d'exemple, l'assemblage fonctionnel minéral 10 de la figure 1 comprend deux éléments fonctionnels minéraux 12.

Comme représenté en figure 1, la face d'aboutement 23 de chaque élément minéral 12 est disposée en regard de la face d'aboutement 23 d'un élément minéral qui lui est adjacent. Les faces d'aboutement 23 de deux éléments adjacents sont parallèles entre elles. Les faces d'aboutement 23 de deux éléments adjacents sont par exemple en contact entre elles. Les faces d'aboutement 23 de deux éléments adjacents sont par exemple collées l'une à l'autre.

La face d'aboutement complémentaire 48 de chaque élément minéral 12 est de préférence disposée en regard de la face d'aboutement complémentaire 48 d'un élément minéral 12 qui lui est adjacent. Les faces d'aboutement complémentaires 48 de deux éléments adjacents sont parallèles entre elles. Les faces d'aboutement complémentaires 48 de deux éléments adjacents sont par exemple en contact entre elles. Les faces d'aboutement complémentaires 48 de deux éléments adjacents sont par exemple collées l'une à l'autre.

Dans l'assemblage fonctionnel minéral 10 représenté en figure 1, l'angle A2 formé entre la deuxième face 22 d'un élément minéral 12 et la face d'aboutement 23 dudit élément minéral 12 est différent de l'angle A1 formé entre la première face 20 d'un élément minéral adjacent et la face d'aboutement 23 dudit élément minéral adjacent. 12.

Les deuxièmes faces 22 des éléments minéraux 12 adjacents s'étendent alors dans des plans sécants.

Dans l'assemblage fonctionnel minéral 10 représenté en figure 1, l'angle B1 formé entre la troisième face 44 d'un élément minéral 12 et la face d'aboutement complémentaire 48 dudit élément minéral 12 est différent de l'angle B2 formé entre la quatrième face 46 d'un élément minéral adjacent et la face d'aboutement complémentaire 48 dudit élément minéral adjacent.

Les troisièmes faces 44 des éléments minéraux 12 adjacents s'étendent alors dans des plans sécants.

Dans le mode de réalisation présenté en figure 3, au moins deux éléments fonctionnels 12 minéraux comprennent une même la couche de renfort composite 16. La couche de renfort composite 16 s'étend alors sur au moins deux éléments minéraux 12 qui partagent la même la couche de renfort composite 16.

En particulier, pour chacun des éléments fonctionnels minéraux 12, au moins un tronçon d'alimentation 30 du premier tracé 26 débouche sur la face d'aboutement 23 de sorte à ce que le canal d'accueil 54 qu'il définit débouche lui aussi sur ladite face d'aboutement 23. Le canal d'accueil 54 débouchant sur la face d'aboutement d'un élément fonctionnel minéral 12 est en particulier aligné au canal d'accueil 54 débouchant sur la face d'aboutement de l'élément fonctionnel minéral 12 lui étant adjacent de sorte à placer ces canaux d'accueil 54 en communication fluidique l'un avec l'autre.

Un procédé 100 de fabrication d'un élément fonctionnel minéral tel que précédemment décrit va maintenant être présenté.

Lors d'une première étape de fourniture 110, une première couche minérale 14 telle que précédemment décrite est fournie.

Lors d'une étape de creusage 120 réalisée à la suite de l'étape de fourniture 110, le premier sillon 24 est creusé dans la première couche minérale. En particulier, le premier sillon est creusé par fraisage lors de l'étape de creusage. Le premier sillon 24 est creusé pour former le premier tracé 26 sur la deuxième face 22, la forme du premier tracé 26 étant avantageusement déterminée par une étape (non représentée) de calcul de la forme du sillon, destinée à calculer la forme du sillon optimisant les performances structurelles de l'élément fonctionnel minéral 12.

Lors d'une étape 130 d'imprégnation réalisée à la suite de l'étape de creusage 120, la couche de renfort composite 16 est imprégnée sous vide dans l'au moins un premier sillon 24 pour former l'élément minéral 12. Lors de l'étape d'imprégnation 130, une pluralité de fibres 34 est par exemple disposée entre d'une part la deuxième face 22 et/ou le premier sillon 24 et d'autre part, une bâche d'imprégnation sous vide. L'homme du métier comprendra que l'imprégnation est ainsi effectué dans la première couche minérale 14, la première couche minérale formant alors un moule d'accueil de la couche de renfort composite 16.

Une pompe à vide est alors connectée à l'au moins un premier sillon 24, par exemple par un des tronçons d'alimentation 30 du premier tracé 26. Un réservoir de liquide est en outre connectée à l'au moins un premier sillon 24, par exemple par un des tronçons d'alimentation 30 du premier tracé 26.

La pompe à vide à est alors activée et le vide qu'elle génère aspire la matrice dans le premier sillon 24. La matrice durcit par la suite, par exemple à la suite d'un refroidissement de ladite matrice ou d'une réaction chimique entre deux composants de ladite matrice, par exemple séparés avant leur aspiration dans le premier sillon 24. La matrice est en particulier durcie autour de la pluralité de fibres 34.

La bâche, la pompe à vide et le réservoir de liquide sont par la suite mis à l'écart de la couche de renfort composite 16 pour obtenir l'élément fonctionnel minéral 12.

Selon une première variante du procédé 100 de fabrication d'un élément fonctionnel minéral, l'étape de fourniture 110 comprend en outre la fourniture d'une deuxième couche minérale 18 telle que précédemment décrite.

L'étape de creusage 120 comprend alors en outre, dans un mode de réalisation particulier de cette variante, le creusage d'un deuxième sillon dans la deuxième couche minérale 18.

Selon cette première variante, le procédé 100 comprend une étape 125 de mise en place, à la suite de l'étape de creusage mais avant l'étape d'imprégnation 130.

Lors de l'étape 125 de mise en place, la première couche minérale 14 est mise en place par rapport à la deuxième couche minérale 18. En particulier, la deuxième face 22 est mise en regard de la troisième face 44. Le premier sillon 24 est mis en regard de la troisième face 44 pour former le canal d'accueil 54. Dans le mode de réalisation dans lequel la deuxième couche minérale 18 comprend un deuxième sillon 50, le premier sillon 24 est mis en regard du deuxième sillon 50 pour former le canal d'accueil 54 de la couche de renfort composite 16. La pluralité de fibres 34 est par ailleurs mise en place dans le canal d'accueil 54. La pluralité de fibre est en outre optionnellement mise en place dans entre la deuxième face 22 et la troisième face 44.

Lors de l'étape 130 d'imprégnation suivant l'étape 125 de mise en place, la couche de renfort composite 16 est imprégnée dans le canal d'accueil 54 pour former l'élément minéral 12.

La bâche est alors disposée entre la deuxième face 22 et la troisième face 44, par exemple en connectant le deuxième contour C2 et le troisième contour C3, pour imprégner sous vide la couche de renfort composite 16 entre la première couche minérale 14 et la deuxième couche minérale 18.

Selon une deuxième variante du procédé 100, le procédé reprend les étapes du procédé selon la première variante précédemment décrite mais comprend en outre une étape de découpe 135 de la première couche minérale 14 et de la deuxième couche minérale 18 autour de la couche de renfort composite 16 pour former l'élément fonctionnel minéral 12, et plus particulièrement un élément fonctionnel minéral 12 de forme tubulaire

Un élément fonctionnel minéral 12 comprenant au moins un sillon dans la première couche minérale 14 est particulièrement avantageux pour améliorer l'esthétique de l'élément fonctionnel 12 tout en améliorant ses performances structurelles.

L'utilisation d'une deuxième couche minérale 18 est par ailleurs particulièrement adaptée pour réduire la visibilité de la couche de renfort composite 16 en améliorant les performances structurelles de l'élément fonctionnel minéral 12. En particulier, un tel élément fonctionnel minéral 12 possède une apparence de bloc minéral monolithique mais ses performances structurelles sont nettement supérieures à celles d'un bloc minéral monolithique.

Le premier sillon 24 formant ensemble un canal d'accueil 54 de la couche de renfort composite assure une bonne fixation de la première couche minérale 14 à la deuxième couche minérale 18. Ceci permet en outre de contrôler la distribution de la couche de renfort composite 16 entre la première couche minérale 14 et la deuxième couche minérale 18, ce qui permet d'améliorer encore les performances structurelles de l'élément fonctionnel minéral 12, en adaptant notamment la localisation de la couche de renfort composite 16 en fonction de de l'utilisation prévue de l'élément fonctionnel minéral 12.

Un élément fonctionnel minéral 12 en forme de plaque est particulièrement avantageux pour réaliser des structures de grandes dimensions. Un tel élément par ailleurs avantageux pour être utilisé en tant qu'élément intermédiaire pour former des éléments fonctionnels minéraux 12 de forme complexe.

Un élément fonctionnel minéral 12 de forme tubulaire est particulièrement avantageux pour la réalisation de structures complexes, par exemple non réalisables à partir de blocs minéraux monolithiques. Un tel élément fonctionnel minéral 12 est par exemple adapté pour former le pied d'un élément de mobilier, un support d'escalier ou même une colonne de maintien de forme complexe.

L'homme du métier comprendra à la lecture de ce document que l'élément fonctionnel minéral 12 n'est pas limité à un élément comprenant une unique première couche minérale et une unique deuxième couche minérale, l'élément fonctionnel minéral 12 comprenant par exemple une pluralité de deuxième couches minérales 12, une deuxième couche minérale 18 comprise entre une première couche minérale 14 et une deuxième couche minérale 18 complémentaire reprenant les caractéristiques d'une première couche minérale 14 par rapport à la deuxième couche minérale 18 complémentaire.

## Revendications

1. Elément fonctionnel minéral (12) comprenant:
une première couche minérale (14) comprenant une première face (20) et une deuxième face (22) définissant entre elles l'épaisseur (E1) de la première couche minérale (14) ; et
- une couche de renfort composite (16) s'étendant sur la première couche minérale (14), la couche de renfort composite (16) comprenant une pluralité de fibres (34) et une matrice (36),
**caractérisé en ce que** la première couche minérale (14) comprend au moins un premier sillon (24) s'étendant dans l'épaisseur (E1) de la première couche minérale (14) et débouchant sur la deuxième face (22), au moins une première portion (38) de la couche de renfort composite (16) étant disposée dans le premier sillon (24) et comblant ledit premier sillon (24) dans ladite épaisseur (E1),
et **en ce que** lequel l'élément minéral (12) comprend une deuxième couche minérale (18) comprenant une troisième face (44) et une quatrième face (46) définissant entre elles l'épaisseur (E2) de la deuxième couche minérale (18), la troisième face (44) s'étendant en regard de la deuxième face (22) de la première couche minérale (14).

2. Elément minéral (12) selon la revendication 1, dans lequel la deuxième couche minérale (18) comprend au moins un deuxième sillon (50) s'étendant dans l'épaisseur (E2) de la deuxième couche minérale (18) et débouchant sur la troisième face (44), au moins une deuxième portion (42) de la couche de renfort composite (16) étant disposée dans le deuxième sillon (50) et comblant ledit deuxième sillon (50) dans ladite épaisseur (E2).

3. Elément minéral (12) selon la revendication 1 ou 2, dans lequel la première couche minérale (14) et la deuxième couche minérale (18) sont solidarisées par la couche de renfort composite (16), le premier sillon (24) s'étendant en regard de la troisième face (44) et définissant un canal d'accueil (54) de la couche de renfort composite (16).

4. Elément minéral (12) selon l'une quelconque des revendications précédentes, dans lequel l'élément minéral (12) présente une forme de plaque, la première face (202) étant sensiblement parallèle à la deuxième face (22).

5. Elément minéral (12) selon l'une des revendications 1 à 3, dans lequel l'élément minéral (12) présente une forme tubulaire, la deuxième face (22) étant sensiblement parallèle à la troisième face (44), la première face (20) étant courbée par rapport à la deuxième face (22) et la quatrième face (46) étant courbée par rapport à la troisième face (44), la première face (20) et la quatrième face (46) formant ensemble un contour tubulaire de l'élément fonctionnel minéral (12).

6. Assemblage fonctionnel minéral (10) comprenant une pluralité d'éléments minéraux (12) selon l'une quelconque des revendications 1 à 5, dans lequel chaque première couche minérale (14) comprend au moins une face d'aboutement (23) transversale à la deuxième face (22), la face d'aboutement (23) de chaque élément minéral (12) étant disposée en regard d'une face d'aboutement (23) d'un élément minéral (12) lui étant adjacent, les faces d'aboutement (23) de deux éléments minéraux (12) adjacents étant parallèles entre elles.

7. Assemblage fonctionnel minéral (10) selon la revendication 6, dans lequel l'angle (A2) formé entre la deuxième face (22) d'un élément minéral (12) et la face d'aboutement (23) dudit élément fonctionnel minéral (12) est différent de l'angle (A1) formé entre la première face (20) d'un élément fonctionnel minéral (12) adjacent et la face d'aboutement (23) dudit élément fonctionnel minéral (12) adjacent.

8. Assemblage fonctionnel minéral (10) selon l'une des revendication 6 ou 7, dans lequel au moins deux éléments fonctionnel minéraux (12) comprennent une même couche de renfort composite (16), la couche de renfort composite (16) s'étendant sur au moins deux éléments fonctionnels minéraux (12).

9. Procédé (100) de fabrication d'un élément minéral (12) selon l'une quelconque des revendications 1 à 5, comprenant les étapes suivantes :
- fourniture (110) d'une première couche minérale (14) comprenant une première face (20) et une deuxième face (22) définissant entre elles l'épaisseur (E1) de la première couche minérale (14),
- creusage (120) d'au moins un premier sillon (24) dans la première couche minérale (14), et
- imprégnation (130) sous vide de la couche de renfort composite (16) dans au moins un premier sillon (24) creusé pour former l'élément fonctionnel minéral (12).

10. Procédé (100) de fabrication d'un élément minéral (12) selon l'une quelconque des revendications 1 à 5, comprenant les étapes suivantes :
- fourniture (110) d'une première couche minérale (14) comprenant une première face (20) et une deuxième face (22) définissant entre elles l'épaisseur (E1) de la première couche minérale (14), et d'une deuxième couche minérale (18) comprenant troisième face (44) et une quatrième face (46) définissant entre elles l'épaisseur (E2) de la deuxième couche minérale (18),
- creusage (120) d'au moins un premier sillon (24) dans la première couche minérale (14),
- mise en place (125) de la deuxième face (22) en regard de la troisième face (44), le premier sillon (24) étant disposé face à la troisième face (44) pour former un canal d'accueil (54) de la couche de renfort composite (16), et
- imprégnation (130) sous vide de la couche de renfort composite (16) dans le canal d'accueil (54) défini par le premier sillon (24) pour former l'élément fonctionnel minéral (12).

11. Procédé (100) de fabrication d'un élément minéral (12) selon la revendication 5, comprenant les étapes suivantes :
- fourniture (110) d'une première couche minérale (14) comprenant une première face (20) et une deuxième face (22) définissant entre elles l'épaisseur (E1) de la première couche minérale (14), et d'une deuxième couche minérale (18) comprenant troisième face (44) et une quatrième face (46) définissant entre elles l'épaisseur (E2) de la deuxième couche minérale (18),
creusage (120) d'au moins un premier sillon (24) dans la première couche minérale (14),
- mise en place (125) de la deuxième face (22) en regard de la troisième face (44), le premier sillon (24) étant disposé face à la troisième face (44) pour former un canal d'accueil (54) de la couche de renfort composite (16),
- imprégnation (130) sous vide de la couche de renfort composite (16) dans le canal d'accueil (54) défini par le premier sillon (24) pour former l'élément fonctionnel minéral (12), et
- découpe (135) de la première couche minérale (14) et de la deuxième couche minérale (18) autour de la couche de renfort composite (16) pour former un élément minéral (12) de forme tubulaire.
